# EUROPÄISCHE PATENTSCHRIFT

(11) **EP 3 852 999 B1**
(45) Veröffentlichungstag und Bekanntmachung des Hinweises auf die Patenterteilung: **02.11.2022**
(21) Anmeldenummer: 19765981.6
(22) Anmeldetag: 05.09.2019
(51) Int. Cl.: B29C 48/05, B29C 48/255, B29C 48/25, B29C 48/72, B29C 64/106, B29C 64/118, B29C 64/209, B29C 64/393, B33Y 10/00, B33Y 30/00, B33Y 50/02, B29C 48/02

(54) **VORRICHTUNG ZUR BEEINFLUSSUNG DES VOLUMENSTROMS VON EXTRUDIERTEM PLASTISCH VERFORMBAREN WERKSTOFF**
DEVICE FOR INFLUENCING THE VOLUMETRIC FLOW OF EXTRUDED PLASTICALLY DEFORMABLE MATERIAL
DISPOSITIF POUR AGIR SUR LE DÉBIT VOLUMIQUE DE MATÉRIAU À DÉFORMATION PLASTIQUE EXTRUDÉ

(30) Priorität: 21.09.2018 DE 102018216149
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: JOHN, Christopher, 09126 Chemnitz (DE); SAUERSTEIN, Tobias, 02763 Zittau (DE); KAUSCH, Martin, 09126 Chemnitz (DE); BLASE, Johannes, 09126 Chemnitz (DE); UHLMANN, Stefan, 09126 Chemnitz (DE)
(74) Vertreter: Pfenning, Meinig & Partner mbB
(86) Internationale Anmeldenummer: PCT/EP2019/073643
(87) Internationale Veröffentlichungsnummer: WO 2020/057983

(56) Entgegenhaltungen:
- EP-A1- 3 308 939
- WO-A1-2014/085842
- DE-A1- 1 937 862
- DE-A1-102005 007 102
- DE-A1-102016 213 439
- DE-C1- 3 815 897
- DE-U1- 8 712 896
- US-A1- 2019 047 219

## Beschreibung

Die Erfindung betrifft eine Vorrichtung zur Beeinflussung des Volumenstroms von extrudiertem plastisch verformbarem Werkstoff. Dabei kann eine Start-Stopp-Funktion für extrusionsbasierte Prozesse mit der zusätzlichen Funktionalität der Volumenstromregelung kombiniert realisiert werden.

Nach heutigem Stand der Technik folgen extrusionsbasierte Prozesse einem kontinuierlichen Ablauf. Ein kurzfristiges sowie kurzzeitiges Pausieren des Prozesses mit anschließendem Wiederanlauf ist aufgrund dessen Charakteristik nicht möglich und wurde in den bisherigen Anwendungen nicht benötigt bzw. technisch nicht weiter verfolgt.

Im Bereich der zunehmend zur Anwendung kommenden generativen Fertigung birgt der Einsatz extrusionsbasierter Verfahren aufgrund der hohen erzielbaren Austragsleistungen ein hohes Entwicklungspotential. Die oben genannte Prozesscharakteristik steht dem insofern gegenüber, dass das verfahrensbedingte Pausieren des Werkstoffaustrages nicht möglich ist. Dieser Umstand führt von unzureichender Bauteilgenauigkeit über überschüssig aufgetragenes Material bis hin zu Schädigungen der Bauteilstruktur. Die Einsatzfähigkeit des extrusionsbasierten 3D-Druckes wird dadurch in wesentlichem Maße eingeschränkt.

Die Charakteristik extrusionsbasierter Prozesse stellt für die Anwendung im Bereich der generativen Fertigung eine hohe technische Hürde bei der Herstellung von qualitativ hochwertigen Bauteilen mit komplexen inneren Strukturen dar.

Das konventionelle Extrudieren ist als kontinuierlicher Prozess ausgelegt und auf das kurzfristige Pausieren nicht angewiesen/ausgelegt. Eine entsprechende Funktion ist bei derzeit erhältlichen Anlagen entsprechend nicht vorgesehen.

Im Bereich der generativen Fertigung existiert für die bestehende Problematik keine praktikable Lösung. Der Großteil der Anwender von extrusionsbasierten Systemen unterbricht den Werkstoffstrom etwa dadurch, dass die Drehung der Schnecke unterbrochen wird und nimmt die entstehenden Überfüllungen/ -extrusionen, Nachlaufen, Fehlstellen, Inkonsistenzen der Strangbreite oder Maßabweichungen in Kauf.

So ist aus DE 10 2016 213 439 A1 ein Extruder für 3-D-Drucker mit variablem Materialdurchsatz bekannt.

DE 87 12 896 U1 betrifft einen Dreiwegehahn, der mit einem kegelstumpfförmigen oder zylindrischen Hahnküken versehen ist.

In DE 10 2005 007 102 A1 ist ein Anfahrventil für eine Granuliervorrichtung beschrieben.

Aufgabe der Erfindung ist es daher, Möglichkeiten zur Beeinflussung des aus einer Austrittsdüse geförderten Volumenstroms eines extrudierten plastisch verformbaren Werkstoffs anzugeben.

Erfindungsgemäß wird diese Aufgabe mit einer Vorrichtung, die die Merkmale des Anspruchs 1 aufweist, gelöst. Vorteilhafte Ausgestaltungen der Erfindung können mit in untergeordneten Ansprüchen bezeichneten Merkmalen realisiert werden.

Die erfindungsgemäße Vorrichtung zur Beeinflussung des Volumenstroms von extrudiertem plastisch verformbarem Werkstoff, der zu einer Austrittsdüse bei der additiven Herstellung von Bauteilen gefördert wird, ist zwischen einer Extrusionseinheit und einer Austrittsdüse angeordnet und mit der Extrusionseinheit und der Austrittsdüse ist ein Flansch verbunden. Dabei ist in dem Flansch ein ausgehend von der Extrusionseinheit bis zur Austrittsdüse geführter Kanal ausgebildet. Die Austrittsdüse kann auch am Flansch ausgebildet sein.

Im Flansch ist ein Kolben senkrecht zur Längsachse des Kanals drehbar gelagert und durch den Kanal geführt. Im Kolben ist im Bereich des Kanals, durch den extrudierter plastisch verformbarer Werkstoff gefördert wird, eine Bohrung ausgebildet, die in einen Bypasskanal mündet, der durch den Kolben bis zu einer Bypassdüse geführt ist.

Außerdem ist an der äußeren Mantelfläche des Kolbens neben der Bohrung, in einem anderen Winkelbereich als die Bohrung angeordnet oder um die Bohrung herumgeführt eine Nut im Bereich des Kanals ausgebildet, so dass in vorgebbaren Winkelstellungen des Kolbens extrudierter plastisch verformbarer Werkstoff durch die Nut in Richtung Austrittsdüse und/oder durch die Bohrung und den Bypasskanal aus der Bypassdüse förderbar ist.

Aus der Bypassdüse austretender extrudierter plastisch verformbarer Werkstoff kann zur Extrusionseinheit zurück geführt oder in einem Auffangbehälter zwischen gelagert werden.

Der Kolben kann dadurch in bestimmte Winkelstellungen gedreht werden, bei denen entweder extrudierter plastisch verformbarer Werkstoff ausschließlich durch die Nut, gleichzeitig durch die Nut, in Richtung Austrittsdüse, und die Bohrung mit dem Bypasskanal durch die Bypassdüse oder ausschließlich durch Bohrung, Bypasskanal und Bypassdüse gefördert werden kann. Dadurch kann eine Beeinflussung des Volumenstroms mit den zwei zuerst genannten Möglichkeiten und ein Förderstopp von extrudiertem plastisch verformbaren Werkstoff für die Fertigung mit der letztgenannten Möglichkeit erreicht werden.

Die mindestens eine Nut sollte in der äußeren Mantelfläche des Kolbens über einen Winkelbereich von mindestens 180 ° in Drehrichtung des Kolbens ausgebildet sein.

Die mindestens eine Nut kann über ihre Länge einen sich stufenweise oder kontinuierlich verändernden freien Querschnitt aufweisen, durch den extrudierter plastisch verformbarer Werkstoff bis zur Austrittsdüse förderbar ist, wenn der Kolben in eine entsprechende Winkelstellung gedreht worden ist. Dadurch kann erreicht werden, dass bei einer Drehung des Kolbens ein entsprechend langer Bereich der mindestens einen Nut zur Verfügung gestellt werden kann, durch den extrudierter plastisch verformbarer Werkstoff zur Austrittsdüse gefördert werden kann. Wegen der Veränderung des freien Querschnitts über die Länge der Nut kann durch definierte Drehung des Kolbens der durch die Nut förderbare Volumenstrom verändert werden. Dabei sollte die mindestens eine Nut über einen Winkelbereich, der größer als 180 ° ist, ausgebildet sein.

Mehrere Nuten können in zueinander versetzten Winkelbereichen an der äußeren Mantelfläche des Kolbens ausgebildet sein. So kann ebenfalls Einfluss auf den zur Austrittsdüse förderbaren Volumenstrom genommen werden, in dem der Kolben so gedreht wird, dass extrudierter plastisch verformbarer Werkstoff allein durch eine der Nuten oder gleichzeitig durch mehrere Nuten zur Austrittsdüse gefördert werden kann.

Der Kolben sollte vorteilhaft mit einem steuer- und/oder regelbaren Drehantrieb verbunden sein. Dieser Drehantrieb kann wiederum von der elektronischen Steuerung, die ohnehin für das jeweilige additive Herstellen von Bauteilen genutzt wird, beeinflusst werden, um den für die Fertigung geförderten Volumenstrom an extrudiertem plastisch verformbaren Werkstoff zu beeinflussen oder vollständig zu stoppen.

Der Flansch ist an einer Seite mit einer Extrusionseinheit, die mindestens eine Extrusionsschnecke aufweist, die in einem Extrusionsrohr drehbar gelagert angeordnet ist, verbunden. Zusätzlich kann eine Plastifiziereinrichtung Bestandteil einer Extrusionseinheit sein. Dies ist dann vorteilhaft, wenn thermoplastischer Werkstoff extrudiert werden soll, der auf eine ausreichende Temperatur gebracht werden soll. Es können aber auch Suspensionen oder Pasten als plastisch verformbarer Werkstoff eingesetzt werden, bei denen ggf. auf eine Erwärmung verzichtet werden kann.

Bei der Erfindung sind ein
- Starten und Stoppen des Werkstoffaustrages durch die Austrittsdüse (oder eine zusätzliche Ablegedüse)
- eine Regulierung des ausgetragenen Volumenstromes möglich.

Es können folgenden Vorteile erreicht werden:
- Unterbrechung eines kontinuierlichen Extrusionsprozesses mit kurzen Schaltzeiten
- Realisierung einer Start-Stopp-Funktion
- vermeiden des Verschleppens von Werkstoff auf/ über dem zu fertigenden Bauteil
- Durchgängig homogen aufgebaute Strukturen (z.B. Strangbreitenkonstanz)
- Vermeidung von Überfüllungen in Randbereichen, engen Radien oder an geometrisch bedingten Umkehrpunkten

Das Anwendungsgebiet mit dem größten Potential stellt die generative/additive Fertigung mittels extrusionsbasierter Verfahren, vor allem bei großvolumigen Bauteilstrukturen, dar. Des Weiteren ist eine Anwendung in allen Bereichen der Extrusionstechnik denkbar. Beispielsweise kann die Erfindung auch beim Beton-3D-Druck im Baugewerbe und 3D-Druck von Lebensmitteln (Schokolade, Pasten oder pürierte Lebensmittel) eingesetzt werden.

Nachfolgend soll die Erfindung beispielhaft erläutert werden.

Dabei zeigen:
Figur 1 eine schematische Schnittdarstellung eines Beispiels einer erfindungsgemäßen Vorrichtung in einer Stellung, bei der Einfluss auf den geförderten Volumenstrom genommen werden kann und
Figur 2 das in Figur 1 gezeigte Beispiel in einer Stellung, bei der die Förderung von extrudiertem plastisch verformbarem Werkstoff zur Austrittsdüse unterbrochen ist.

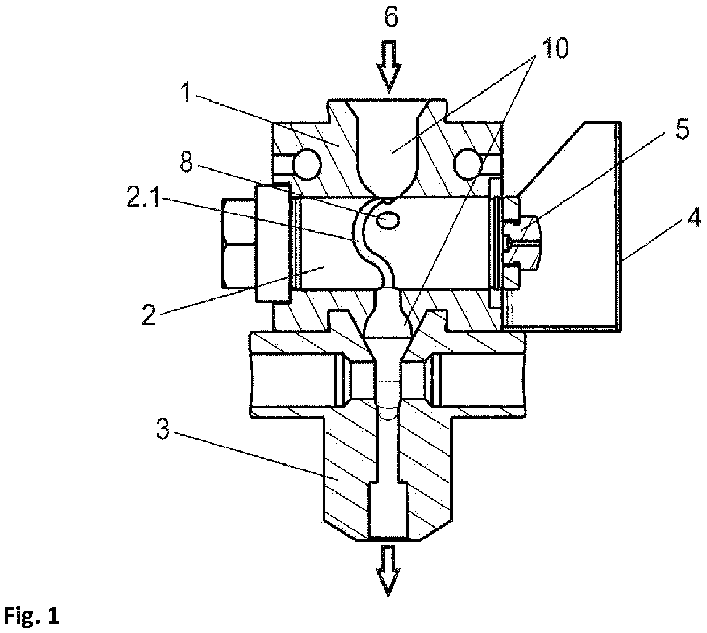

In Figur 1 ist ein Flansch 1 gezeigt, der an der hier vertikal oberen Seite mit einer nicht dargestellten Extrusionseinheit verbunden ist. Die Extrusionseinheit fördert extrudierten plastisch verformbaren Werkstoff 6 in einen durch den Flansch 1 geführten Kanal 10 bis zur Austrittsdüse 3, was mit den Pfeilen verdeutlicht werden soll.

Durch den Flansch 1 ist eine Bohrung senkrecht zur Längsachse des Kanals 10 ausgebildet oder dort ist ein Hohlzylinder eingesetzt. In der Bohrung oder dem Hohlzylinder ist ein Kolben 2 drehbar gelagert. Außerdem sind Dichtungen vorhanden, die ein Austreten von Extrudat verhindern sollen.

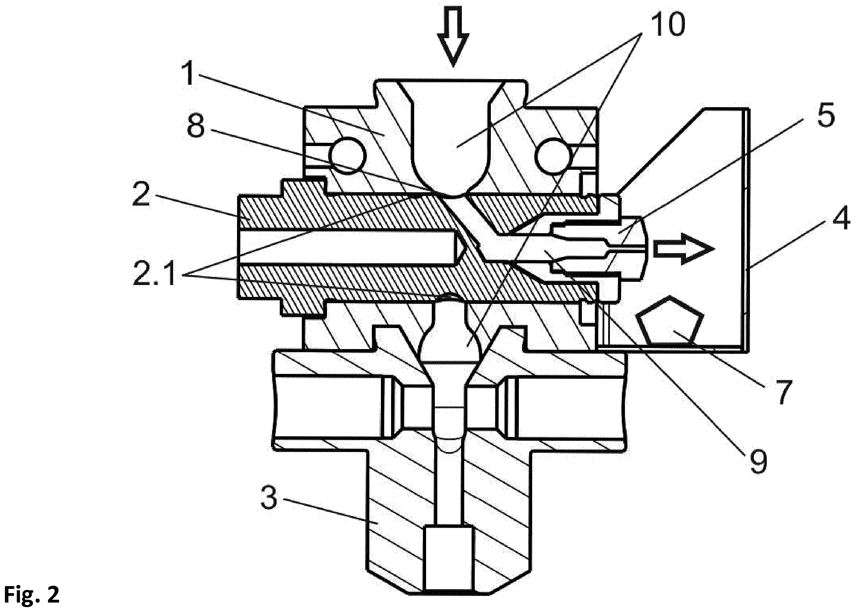

Aus Figur 1 ist auch ersichtlich, dass in der äußeren Mantelfläche des Kolbens 2 eine Nut 2.1 ausgebildet ist, durch die der extrudierte plastisch verformbare Werkstoff 6 bis zur Austrittsdüse 3 für eine additive Fertigung gefördert werden kann. An der äußeren Mantelfläche des Kolbens 1 ist auch eine Bohrung 8 in das Innere des Kolbens 1 zu einem Bypasskanal 9 geführt, der wiederum in eine Bypassdüse 5 mündet (s. Figur 2).

Die Bohrung 8 und die Nut 2.1 sind beim in Figur 1 gezeigten Beispiel so angeordnet, dass die Nut 2.1 um die Bohrung 8 in einem Bogen herum geführt ist. Bei der in Figur 1 gezeigten Winkelstellung des Kolbens 2 kommuniziert die Bohrung 8 nicht mit dem Kanal 10, so dass extrudierter plastisch verformbarer Werkstoff 6 ausschließlich durch die Nut 2.1 zur Austrittsdüse 3 gefördert werden kann.

Wird in Figur 1 in nicht dargestellter Form der Kolben 2 in eine Winkelstellung gedreht, bei der auch plastisch verformbarer Werkstoff 6 in die Bohrung 8, dann durch den Bypasskanal 9, zur Bypassdüse 5 in einen Auffangbehälter 4 gelangen kann, wird nur ein Teil des gesamten von der Extrusionseinheit geförderten Volumenstroms an extrudiertem plastisch verformbaren Werkstoff 6 durch die Nut 2.1 zur Austrittsdüse 3 gefördert und dadurch kann Einfluss auf den für die Fertigung in dieser Winkelstellung des Kolbens 2 zur Verfügung gestellten Volumenstrom an extrudiertem plastisch verformbaren Werkstoff 6 genommen werden.

In Figur 2 ist eine Stellung des Kolbens 2 gezeigt, bei der dieser in eine Winkelstellung gedreht worden ist, bei der die Nut 2.1 nicht mit dem Kanal 10 kommuniziert. Es besteht also keine Verbindung zwischen Extrusionseinheit und Austrittsdüse 3.

Von der Extrusionseinheit in den Kanal 10 geförderter extrudierter plastisch verformbarer Werkstoff wird vollständig in die Bohrung 8, von dort durch den Bypasskanal 9 zur Bypassdüse 5 und von dort bei diesem Beispiel in den Auffangbehälter 4 gefördert, wo er als Abfall 7 oder für eine Wiederverwendung zwischen gelagert werden kann.

## Patentansprüche

1. Vorrichtung zur Beeinflussung des Volumenstroms von extrudiertem plastisch verformbaren Werkstoff, der zu einer Austrittsdüse bei der additiven Herstellung von Bauteilen gefördert ist, mit einem Flansch (1), der zwischen einer Extrusionseinheit und einer Austrittsdüse (3) angeordnet und mit der Extrusionseinheit und der Austrittsdüse (3) verbunden ist, bei der
in dem Flansch (1) ein ausgehend von der Extrusionseinheit bis zur Austrittsdüse (3) ausgebildeter Kanal (10) eingebracht ist und
im Flansch (1) ein Kolben (2) senkrecht zur Längsachse des Kanals (10) drehbar gelagert und durch den Kanal (10) geführt ist,
**dadurch gekennzeichnet, dass**
im Kolben (2) im Bereich des Kanals (10) eine Bohrung (8) ausgebildet ist, die in einen Bypasskanal (9) mündet, der durch den Kolben (2) bis zu einer Bypassdüse (5) geführt ist, und
außerdem an der äußeren Mantelfläche des Kolbens (2) neben der Bohrung (9), in einem anderen Winkelbereich als die Bohrung (8) angeordnet oder um die Bohrung (8) herumgeführt mindestens eine Nut (2.1) im Bereich des Kanals (10) ausgebildet ist, so dass in Abhängigkeit der Winkelstellungen des Kolbens (2) extrudierter plastisch verformbarer Werkstoff (6) durch die Nut (2.1) in Richtung Austrittsdüse (3)
und/oder durch die Bohrung (8) und den Bypasskanal (9) aus der Bypassdüse (5) förderbar ist.

2. Vorrichtung nach Anspruch 1, **dadurch gekennzeichnet, dass** die mindestens eine Nut (2.1) in der äußeren Mantelfläche des Kolbens (2) über einen Winkelbereich von mindestens 180 ° in Drehrichtung des Kolbens (2) ausgebildet ist.

3. Vorrichtung nach einem der vorhergehenden Ansprüche, **dadurch gekennzeichnet, dass** die Nut (2.1) über ihre Länge einen sich stufenweise oder kontinuierlich verändernden freien Querschnitt aufweist, durch den extrudierter plastisch verformbarer Werkstoff (6) bis zur Austrittsdüse (3) förderbar ist, wenn der Kolben (2) in eine entsprechende Winkelstellung gedreht worden ist.

4. Vorrichtung nach einem der vorhergehenden Ansprüche, **dadurch gekennzeichnet, dass** mehrere Nuten in zueinander versetzten Winkelbereichen an der äußeren Mantelfläche des Kolbens ausgebildet sind.

5. Vorrichtung nach einem der vorhergehenden Ansprüche, **dadurch gekennzeichnet, dass** der Kolben (2) mit einem steuer- und/oder regelbaren Drehantrieb verbunden ist.

## Claims

1. A device for influencing the volume flow of extruded, plastically deformable material, the material being conveyed to an outlet nozzle in the additive manufacturing of components, having a flange (1) arranged between an extrusion unit and an outlet nozzle (3) and being connected to the extrusion unit and the outlet nozzle (3), in which
a channel (10) formed from the extrusion unit to the outlet nozzle (3) is introduced in the flange (1) and a piston (2) is rotatably mounted in the flange (1) perpendicular to the longitudinal axis of the channel (10) and guided through the channel (10),
**characterized in that**
a bore (8) is formed in the piston (2) in the region of the channel (10) and opens into a bypass channel (9) guided through the piston (2) to a bypass nozzle (5), and
in addition, at least one groove (2.1) is formed in the region of the channel (10) on the outer lateral surface of the piston (2) next to the bore (9), arranged in a different angular range than the bore (8) or around the bore (8), so that
depending on the angular positions of the piston (2), extruded, plastically deformable material (6) can be conveyed through the groove (2.1) in the direction of the outlet nozzle (3)
and/or through the bore (8) and the bypass channel (9) out of the bypass nozzle (5).

2. The device according to claim 1, **characterized in that** the at least one groove (2.1) is formed in the outer lateral surface of the piston (2) over an angular range of at least 180° in the direction of rotation of the piston (2).

3. The device according to any one of the preceding claims, **characterized in that** the groove (2.1) has a stepwise or continuously changing free cross-section over its length, through which extruded, plastically deformable material (6) can be conveyed to the outlet nozzle (3) when the piston (2) has been rotated to an appropriate angular position.

4. The device according to any one of the preceding claims, **characterized in that** a plurality of grooves are formed in mutually offset angular regions on the outer lateral surface of the piston.

5. The device according to any one of the preceding claims, **characterized in that** the piston (2) is connected to a controllable and/or regulatable rotary drive.

## Revendications

1. Dispositif pour agir sur le débit volumique d'un matériau à déformation plastique extrudé, qui est transporté vers une buse de sortie lors de la fabrication par addition d'éléments, avec un rebord (1), qui est disposé entre l'unité d'extrusion et une buse de sortie (3) et est relié avec l'unité d'extrusion et la buse de sortie (3), chez lequel
un canal (10) est incorporé dans le rebord (1), formé en partant de l'unité d'extrusion jusqu'à la buse de sortie (3), et un piston (2) perpendiculaire à l'axe longitudinal du canal (10) est logé en pouvant être mis en rotation dans le rebord (1) et est mené à travers le canal (10),
**caractérisé en ce qu'**un
alésage (8) est conçu dans le piston (2) dans la zone du canal (10), qui débouche dans un canal de dérivation (9) qui est mené à travers le piston (2) jusqu'à une buse de dérivation (5), et
en outre, la surface d'enveloppe extérieure du piston (2) est disposée à côté de l'alésage (9), dans une autre zone angulaire que l'alésage (8), ou au moins une rainure (2.1) est menée autour de l'alésage (8) dans la zone du canal (10), de sorte qu'en
fonction des réglages angulaires du piston (2), un matériau à déformation plastique (6) extrudé peut être transporté à travers la rainure (2.1) en direction de la buse de sortie (3)
et/ou peut être transporté à travers l'alésage (8) et le canal de dérivation (9) à partir de la buse de dérivation (5).

2. Dispositif selon la revendication 1, **caractérisé en ce que** l'au moins une rainure (2.1) est formée dans la surface d'enveloppe extérieure du piston (2) sur une plage angulaire d'au moins 180° dans la direction de rotation du piston (2).

3. Dispositif selon l'une des revendications précédentes, **caractérisé en ce que** la rainure (2.1) présente une section transversale libre se modifiant par étapes ou de manière continue sur sa longueur, par laquelle le matériau à déformation plastique (6) extrudé peut être transporté jusqu'à la buse de sortie (3) lorsque le piston (2) a été tourné dans une position angulaire correspondante.

4. Dispositif selon l'une des revendications précédentes, **caractérisé en ce que** plusieurs rainures sont conçues sur la surface d'enveloppe extérieure du piston dans des zones angulaires décalées les unes par rapport aux autres.

5. Dispositif selon l'une des revendications précédentes, **caractérisé en ce que** le piston (2) est relié avec un entraînement de commande et/ou un entraînement en rotation réglable.
